# EUROPEAN PATENT SPECIFICATION

(11) **EP 3 795 921 B1**
(45) Date of publication and mention of the grant of the patent: **10.01.2024**
(21) Application number: 19802491.1
(22) Date of filing: 17.01.2019
(51) Int. Cl.: F24H 9/00, F16L 19/028, F16L 37/12, F23D 14/04, F23D 14/64, F24H 9/1836

(54) **WATER PIPE CONNECTION STRUCTURE AND BURNER**
WASSERLEITUNGVERBINDUNGSSTRUKTUR UND BRENNER
STRUCTURE DE RACCORDEMENT DE TUYAU D'EAU ET BRÛLEUR

(30) Priority: 15.05.2018 CN 201820732876 U; 15.05.2018 CN 201820732998 U
(43) Date of publication of application: 24.03.2021
(73) Proprietor: Wuhu Midea Kitchen And Bath Appliances Mfg. Co, Ltd., Wuhu, Anhui 241009 (CN); Midea Group Co., Ltd., Foshan, Guangdong 528311 (CN)
(72) Inventor: CHEN, Wenfeng, Wuhu, Anhui 241009 (CN); MENG, Xianchao, Wuhu, Anhui 241009 (CN); LIANG, Guorong, Wuhu, Anhui 241009 (CN)
(74) Representative: RGTH
(86) International application number: PCT/CN2019/072149
(87) International publication number: WO 2019/218716

(56) References cited:
- EP-A1- 1 947 375
- EP-A2- 1 898 139
- WO-A1-2010/004604
- WO-A2-2014/199359
- CN-A- 107 701 826
- CN-U- 201 803 013
- CN-U- 203 823 271
- CN-U- 204 083 602
- CN-U- 204 227 677
- CN-U- 204 358 292
- CN-U- 205 534 696
- CN-U- 208 238 226
- CN-U- 208 269 422
- DE-U1-202009 011 004
- JP-A- 2000 161 517
- KR-Y1- 200 404 679
- US-A- 4 674 775

## Description

The present application claims priority to Chinese Patent Application No. 201820732876.9, entitled "WATER PIPE CONNECTION STRUCTURE AND BURNER", filed with the Chinese Patent Office on May 15, 2018, and to Chinese Patent Application No. 201820732998.8, entitled "WATER PIPE CONNECTION STRUCTURE AND BURNER", filed with the Chinese Patent Office on May 15, 2018.

### TECHNICAL FIELD

The present invention relates to a field of household appliances, in particularto, a water pipe connection structure and a burner applying the same.

### BACKGROUND

A burner is a general term for devices that cause fuel and air to be injected in a certain manner and then mixed for combustion. At present, a burner is mostly used in household appliances such as a water heater or a wall hanging furnace to provide domestic hot water or household heating for residents. When a burner is used, a cooling water pipe is usually required to cool the burner down, and the cooling water pipe is required to be connected with an external water inlet pipe, in order to obtain cooled liquid.

However, it is complicated to connect an existing cooling water pipe with a water inlet pipe, and shaking occurs during a connection, which is inconvenient for operation.

WO 2010/004604 A1 directs to a system for leaktight connection in particular for combustible gases, comprising a threaded male attachment lement integrally formed with a valve unit, and a second leaktight connection means being screwed onto the male attachment element.

DE 20 2009 011004 U1 provides a quickly dismountable and mountable connector for a pressure indicator, wherein a spacer that can be inserted into a spacer recess provided on a connector main body, and the spacer engages with notches of another connector, such that achieving the connection between the connector main body and the connector.

EP 1 898139 A2 discloses a distribution manifold for a fluid such as water, wherein a manifold element having a female part and a male part is provided, and the female part of a manifold element can be engaged and fixed with the male part of another manifold element via an axial locking member.

a connection assembly for water-heating apparatus is depicted in WO 2014/199359 A2;

KR 200 404 679 Y1 also considers an assembly structure of water line connection which is part of a boiler, comprising a fixing bracket fixed on a casing, a pipe connection and a fastener; wherein the fixing bracket is provided with a coupling hole having a shape matching a fixing frame provided on the pipe connection, thereby the pipe connection can go through the coupling hole and the rotation of the pipe connection relative to the fixing bracket can be restricted.

### SUMMARY

Embodiments of the present disclosure provide a burner, and a water heater applying the same, to solve or alleviate one or more technical problems in the existing technology, to provide at least one beneficial option or creation condition.

In order to achieve above objectives, there is provided a water pipe connection structure for a burner, according to claim 1.
The water pipe connection structure comprises
a first connecting head, a second connecting head, a first side plate, a cooling water pipe and a water inlet pipe, wherein the first connecting head is connected to the cooling water pipe, the second connecting head is connected to the water inlet pipe;
wherein the second connecting head is connected to the first connecting head;
wherein the first connecting head is provided with a rotation stopping portion clamped in the first side plate;
the first connecting head is clamped and fastened to the first side plate through the rotation stopping portion.

The first side plate is provided with a first mounting hole adapted to a shape of the rotation stopping portion;
the rotation stopping portion is provided with first rotation stopping surfaces parallel to each other, and preferably the first rotation stopping surface is symmetrically arranged relative to a central axis of the first connecting head; the first mounting hole is provided with second rotation stopping surfaces at positions corresponding to the first rotation stopping surfaces;
the rotation stopping portion is clamped in the first mounting hole, the first rotation stopping surfaces abut against the second rotation stopping surfaces, to enable the first connecting head to be clamped and fastened to the first side plate.

The first connecting head further comprises a threaded portion;
wherein the threaded portion is provided on the rotation stopping portion, the first connecting head is in thread connection with the second connecting head through the threaded portion.

An end portion of the water inlet pipe extends outwards to form a clamping foot, the clamping foot is abutted against an end surface of the threaded portion;
the clamping foot is compressed and fixed with the threaded portion, through a thread connection between the second connecting head and the threaded portion.

In an embodiment, a sealing ring is provided between the clamping foot and the threaded portion; the sealing ring is compressed and fixed between the clamping foot and the threaded portion, through the thread connection of the threaded portion.

In an embodiment of the present invention, the first connecting head and the cooling water pipe are connected, in a sealed manner, by a sealing ring.

According to another aspect of the present disclosure, an embodiment of the present disclosure provides a burner, which includes the water pipe connection structure described above.

Some of the above technical schemes have the following advantages or beneficial effects, according to the water pipe connection structure disclosed by the present disclosure, when the cooling water pipe and the water inlet pipe are assembled, the rotation stopping portion may limit the rotation of the first connecting head relative to the first side plate, thereby solving the problem of loose mounting, so that the installation and fixation are firmer.

In addition to the above, embodiments and features of the present invention will be readily understood from the following detailed description in conjunction with the accompanying drawings.

### BRIEF DESCRIPTION OF THE DRAWINGS

In the drawings, like reference numerals refer to same or similar components or elements throughout the several drawings unless otherwise specified. The drawings are not necessarily drawn to scale. It should be understood that these drawings only depict some embodiments in accordance with the present disclosure and are not to be construed as limiting the scope of the present disclosure.
FIG. 1 is a cross-sectional view of a water pipe connection structure 1000 of the present disclosure;
FIG. 2 is a perspective view of a first connecting head of a water pipe connection structure 1000 of the present disclosure;
FIG. 3 is a cross-sectional view of a water pipe connection structure 2000 of an example not covered by the claims;
FIG. 4 is a cross-sectional view of a clamp body of a water pipe connection structure 2000 and a water pipe connection structure 3000 in an embodiment of the example not covered by the claims;
FIG. 5 is a schematic view of a clamp body of a water pipe connection structure 2000 and a water pipe connection structure 3000 in an embodiment of the example not covered by the claims;
FIG. 6 is a cross-sectional view of a water pipe connection structure 3000 of the example not covered by the claims;
FIG. 7 is a front view of a burner employed with a water pipe connection structure 1000 of the present disclosure;
FIG. 8 is a top view of a burner in FIG. 7 of the present disclosure; and
FIG. 9 is a right-side view of a burner in FIG. 7 of the present disclosure.

### DETAILED DESCRIPTION

In the following, only certain exemplary embodiments are briefly described. As will be appreciated by those skilled in the art, the described embodiments may be modified in various ways without departing from the scope of the present invention as defined in the claims. Accordingly, the drawings and description are to be regarded as illustrative in nature rather than restrictive.

In a first aspect of the present disclosure, a water pipe connection structure is provided.

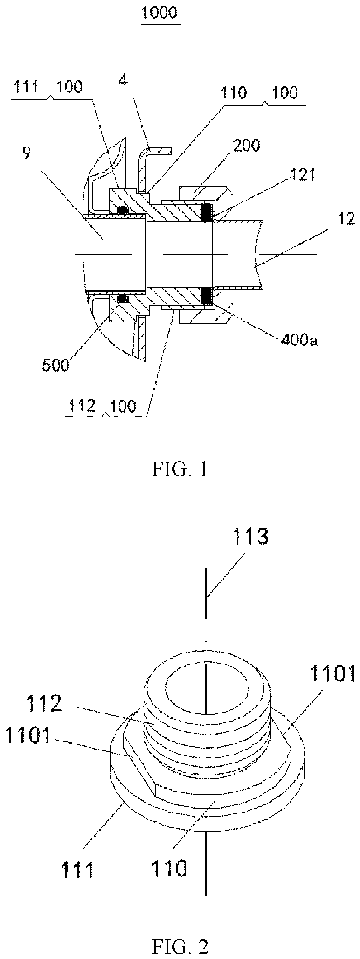

The water pipe connection structure of the present disclosure is described below with reference to FIG. 1 to FIG. 6.

Referring to FIG. 1, FIG. 3, and FIG. 6, water pipe connection structures 1000, 2000, 3000 of the present disclosure include a first connecting head 100 and a second connecting head 200, where the first connecting head 100 may be used for connecting a cooling water pipe, and the second connecting head 200 may be used for connecting a water inlet pipe.

Further, the second connecting head 200 is sleeved on the first connecting head 100, so that the cooling water pipe 9 and the water inlet pipe 12 may be connected to each other through a connection of the first connecting head 100 and the second connecting head 200.

Referring to FIG. 2 in combination, the first connecting head 100 is provided with an rotation stopping portion 110, where the rotation stopping portion 110 may be clamped in a first side plate 4, so that the first connecting head 100 is clamped and fastened to the first side plate 4 through the rotation stopping portion 110. In this way, when the second connecting head 200 is screwed onto the first connecting head 100, the first connecting head 100 is restrained by the rotation stopping portion 110, and is clamped with the first side plate 4. Therefore, the first connecting head 100 will not rotate relative to the first side plate 4 along with the connection with the second connecting head 200, thereby avoiding the problem of loose mounting between the first connecting head 100 and the second connecting head 200, so that the connection between the first connecting head 100 and the second connecting head 200 is firmer.

Referring to FIG. 2, the first connecting head 100 further includes a connecting portion 111. The connection portion 111 is connected with the cooling water pipe 9, and the rotation stopping portion 110 is provided on the connection portion 111.

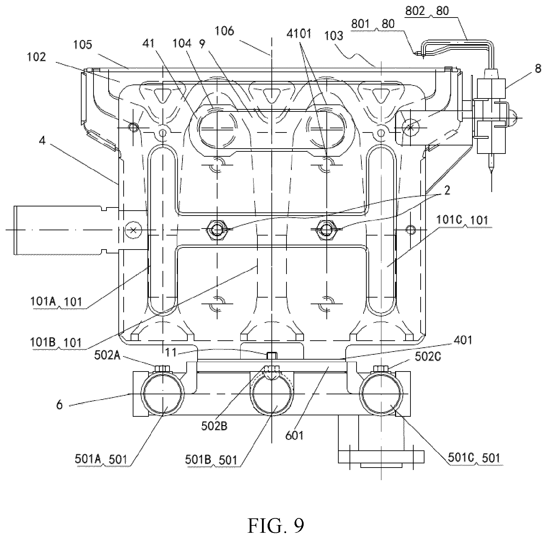

In addition, the first side plate 4 is provided with a first mounting hole 41 (see FIG. 9 in combination), which is adapted to the shape of the rotation stopping portion 110, so that the rotation stopping portion 110 may be clamped into the first mounting hole 41.

Further, the rotation stopping portion 110 is provided with first rotation stopping surfaces 1101 which are parallel to each other. The first rotation stopping surfaces 1101 may be arranged symmetrically with respect to a central axis 113 of the first connecting head 100. In addition, the first mounting hole 41 is provided with second rotation stopping surfaces 4101 at positions corresponding to positions of the first rotation stopping surfaces 1101 (see FIG. 9 in combination). Here, the second rotation stopping surfaces 4101 may be adapted to the shapes of the first rotation stopping surfaces 1101. Thus, when the rotation stopping portion 110 is claimed into the first mounting hole 41, the first rotation stopping surfaces 1101 may abut against the second rotation stopping surfaces 4101, so that the first connecting head 100 may be clamped and fastened to the first side plate 4. When the second connecting head 200 is connected to the first connecting head 100, the rotation stopping proportion 110 limits the rotation of the first connecting head 100 with respect to the first side plate 4, thereby avoiding the problem of loose mounting between the first connecting head 100 and the second connecting head 200.

In an embodiment, referring to the water pipe connection structure 1000 shown in FIG. 1 and FIG. 2, the first connecting head 100 further includes a threaded portion 112, the threaded portion 112 is provided on the rotation stopping portion 110. In addition, the outer diameter of the threaded portion 112 is provided with an external thread, the inner diameter of the second connecting head 200 may be provided with an internal thread, so that the first connecting head 100 may be threadedly connected with the second connecting head 200 through the threaded portion 112. In an embodiment, the second connecting head 200 may be adopted as a nut, but it is not limited thereto.

Referring to FIG. 1, an end portion of the water inlet pipe 12 extends outwards to form a clamping foot 121, and the clamping foot 121 may be abutted against an end surface of the threaded portion 112. When the second connecting head 200 is connected to the first connecting head 100 and is in thread connection with the first connecting head 100, the first connecting head 100 exerts a force on the clamping foot 121, so that the clamping foot 121 may be compressed onto the end face of the threaded portion 112, and the connection between the water inlet pipe 12 and the cooling water pipe 9 is completed.

Preferably, a sealing ring 400a is provided between the clamping foot 121 and the threaded portion 112. When the second connecting head 200 is in thread connection with the first connecting head 100, the sealing ring 400a is compressed and fixed between the clamping foot 121 and the threaded portion 112, so that the connection between the water inlet pipe 12 and the first connecting head 100 may be tighter and more secure.

Further preferably, the clamping foot121 is formed in the following manner, i.e., it may extend toward the outer diameter of the inlet pipe 12 firstly, and then be folded back from the extended end. In this way, thickness of the clamping foot 121 may be increased, and a deformation of the clamping foot 121 during screwing the second connecting head 200 in may be avoided, thereby improving sealing effect.

Referring to FIG. 1, the first connecting head 100 and the cooling water pipe 9 are connected, in a sealed manner, by a sealing ring 500, thereby reducing looseness, so that a connection between the first connecting head 100 and the cooling water pipe 9 is more secure.

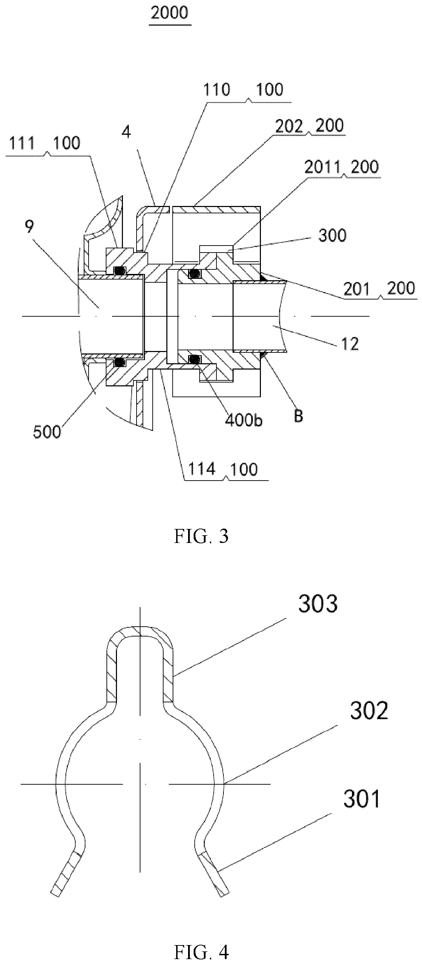

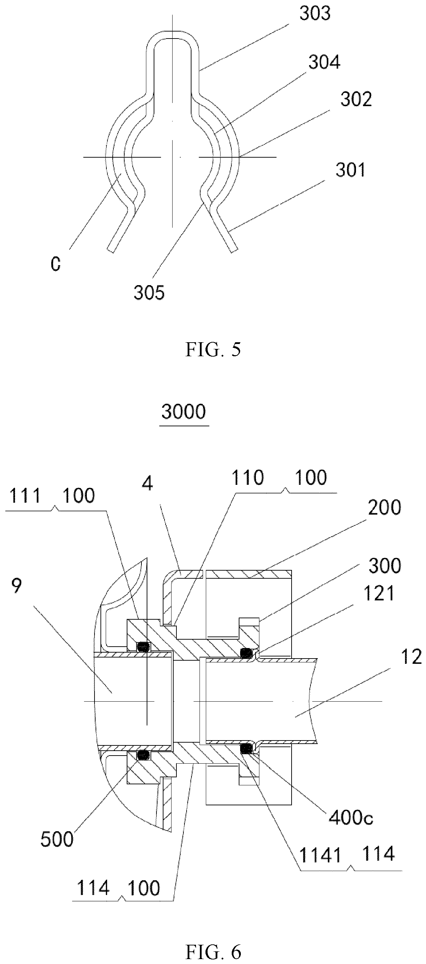

In another embodiment, referring to the water pipe connection structure 2000 and the water pipe connection structure 3000 shown in FIG. 3 and FIG. 6, the first connecting head 100 includes a connection portion 111 (shown in FIG. 2), a rotation stopping portion 110 (shown in FIG. 2), and an extension portion 114, where the connection portion 111 is connected to the cooling water pipe 9, the extension portion 114 is provided on the rotation stopping portion 110.

Further, the outer diameter of the extension portion 114 is clamped and sleeved with a clamp body 300. The second connecting head 200 is sleeved on the first connecting head 100, and may be clamped and fixed with the extension portion 114 through the clamp body 300. In this way, the cooling water pipe 9 and the water inlet pipe 12 may be connected to each other by means of a clamp connection of the first connecting head 100 and the second connecting head 200.

By applying the water pipe connection structure of the present embodiment, when the cooling water pipe 9 and the water inlet pipe 12 are assembled, the clamping operation is simple and convenient, and the mounting and fixation are firm.

Referring to FIG. 4, the clamp body 300 includes an open portion 301, an arc portion 302, and a protrusion portion 303. A circumferential portion of the arc portion 302 is matched with the outer diameter of the extension portion 114, so that the arc portion 302 is conveniently clamped and sleeved on the extension portion 114.

Further, a lower end of the arc portion 302 is connected with the open portion 301, and the open portion 301 may be disposed obliquely outwards with respect to the arc portion 302. A clamping hole 2011 is provided in the second connecting head 200, where the clamping hole 2011 may be provided in a ring shape along the inner wall of the second connecting head 200, or clamping holes may be provided at positions of the open portion 301 and the protrusion portion 303, respectively, which are not limited thereto.

When the second connecting head 200 is sleeved on the extension portion 114, the open portion 301 may be clamped into the clamping hole 2011 along with the sleeve operation of the second connecting head 200, and abuts against an inner wall of the clamping hole 2011, thereby clamping the second connecting head 200 and the extension portion 114 to each other tightly.

Further, an upper end of the arc portion 302 is connected with a protrusion portion 303, and the protrusion portion 303 may be arranged to protrude upward with respect to the arc portion 302. Thus, when the second connecting head 200 is sleeved onto the extension portion 114, the arc portion 302 may be clamped in the clamping hole 2011 and abut against the inner wall of the clamping hole 2011, so that the second connecting head 200 and the first connecting head 100 are clamped to each other tightly.

The open portion 301 and the protrusion portion 303 fit with each other to clamp the second connecting head 200 at the upper and lower ends of the arc portion 302 tightly. In addition, points where the open portion 301 and the protrusion portion 303 abut against the second connecting head 200 form a triangular structure, and the triangular structure is stable, so that the open portion 301 and the protrusion portion 303 are clamped to the second connecting head 200 much firmly.

Referring to FIG. 5 in combination, an inner side of the arc portion 302 may also be provided with a clamp-sleeving portion 304. The clamp-sleeving portion 304 is also in the shape of an arc, and the circumferential portion of the clamp-sleeving portion 304 is matched with the outer diameter of the extension portion 114, so that the clamp-sleeving portion 304 may be tightly sleeved on the extension portion 114.

Further, an end portion of the clamp-sleeving portion 304 is connected with the arc portion 302 through a connecting foot 305, so that a buffer gap C may be formed between the clamp-sleeving portion 304 and the arc portion 302. Thus, when the outer diameter of the extension portion 114 of the first connecting head 100 is slightly larger than the diameter defined by the clamp-sleeving portion 304, the clamp-sleeving portion 304 may be forced to approach toward the arc portion 302, that is, the buffer gap C is reduced, so that the range of application of the clamp body 300 to the outer diameter of the extension portion 114 may be expanded.

Preferably, the clamp body 300 is made of an elastic material, and due to the characteristics of the elastic material, the clamp body 300 may be more smoothly clamped onto the extension portion 114 of the first connecting head 100, and the open portion 301 and the protrusion portion 303 may be brought into close contact with the inner wall of the clamping hole 2011, so that the first connecting head 100 and the second connecting head 200 are clamp-fitted much securely.

In another embodiment, referring to the water pipe connection structure 2000 shown in FIG. 3, the second connecting head 200 may include a second inner connecting head 201 and a second outer connecting head 202, where the second inner connecting head 201 is connected to the water inlet pipe 12.

Further, the second inner connecting head 201 is abutted and connected to the extension portion 114 of the first connecting head 100, and the two are clamped into a whole by the clamp-sleeving portion 304.

The clamping hole 2011 is provided on the second outer connecting head 202, so that when the second outer connecting head 202 is sleeved on the second inner connecting head 201 and the extension portion 114 of the first connecting head 100, the open portion 301 and the protrusion portion 303 are clamped into the clamping hole 2011 on the second outer connecting head 202 and abut against the inner wall of the clamping hole 2011. Thus, the second outer connecting head 202 and the second inner connecting head 201 are clamp-fitted with the first connecting head 100.

The second connecting head 200 adopts a double-layer structure (the second inner connecting head 201 and the second outer connecting head 202) to be clamped with the extension portion 114 of the first connecting head 100, so that the connection may be firmer.

Referring to FIG. 3, a front end of the second inner connecting head 201 may extend into the extension portion 114 of the first connecting head 100, and may be connected, in a sealed manner, with the extension portion 114 through a sealing ring 400b, so that the clamp body 300 may be fitted, to make the connection of the second inner connecting head 201 to the first connecting head 100 more tight and firmer.

Referring to FIG. 3, the water inlet pipe 12 may be welded and fixed to the second inner connecting head 201, so that looseness of the water inlet pipe 12 may be reduced.

Preferably, one end of the water inlet pipe 12 may protrude into the second inner connecting head 201, and the second inner connecting head 201 may be fixed to the outer diameter of the water inlet pipe 12 exposed thereto by welding at a position shown as B in FIG. 3.

Referring to FIG. 3, the first connecting head 100 is connected, in a sealed manner, with the cold water pipe 9 by a sealing ring 500, thereby reducing looseness, so that the connection between the first connecting head 100 and the cold water pipe 9 is more secure.

In another embodiment, referring to the water pipe connection structure 3000 shown in FIG. 6, a clamping foot 121 may be provided on an outer diameter of the water inlet pipe 12, an inner diameter of the extension portion 114 may be provided with a clamping groove 1141. When the second connecting head 200 is clamped into the extension portion 114, the clamping foot 121 is clamped into the clamp groove 1141 along with the front end of the water inlet pipe 12 extending into the first connecting head 100.

Further, a sealing ring 400c may be arranged adjacent to the clamping foot 121 and may be connected, in a sealed manner, between the clamping groove 1141 and the inlet pipe 12. In an assembling process, the second connecting head 200 abuts against the clamping foot 121 and the sealing ring 400c, and is clamped and fixed with the extension portion 114 through the clamp body 300. Thus, the sealing ring 400c may be fitted with the clamping foot 121, further improving the tightness of connection between the second connecting head 200 and the first connecting head 100.

Among others, the first connecting head 100, the second connecting head 200 (non-two-layer structure), the clamp body 300, and the like are described above, which will not be repeated here in detail.

In a second aspect of the present disclosure, a burner is provided.

The burner of the present disclosure includes a water pipe connection structure described above.

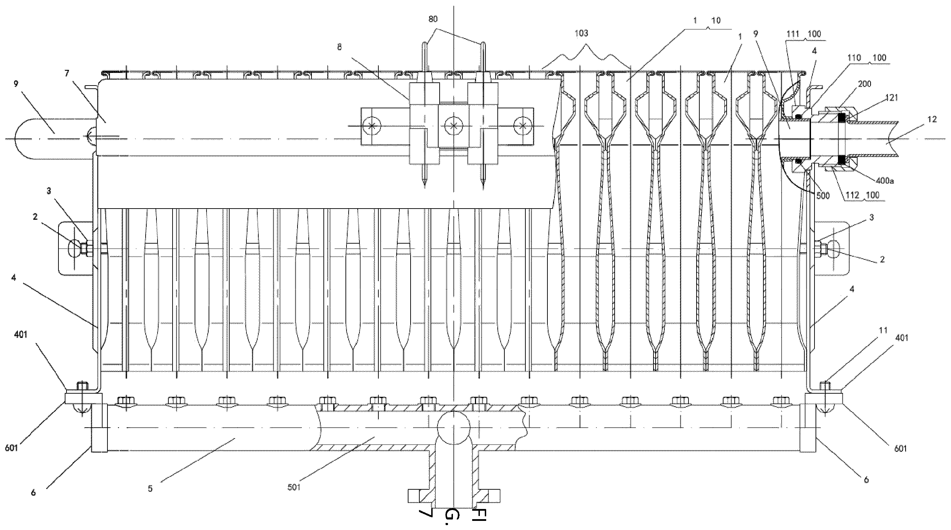

The burner of the present disclosure are described below with reference to FIG. 7 to FIG. 9. The water pipe connection structure 1000 is shown in FIG. 7 merely as an example, and it should be understood by a person skilled in the art that the water pipe connection structure 2000 and the water pipe connection structure 3000 may be used instead of the water pipe connection structure 1000 in FIG. 7.

Referring to FIG. 7 to FIG. 9, in an embodiment, a burner includes a plurality of flame distributors 1, the plurality of flame distributors 1 are arranged parallel to each other. At least three ejection tubes 101 are provided on each flame distributor 1, and a gas mixing chamber 102 is also provided on the flame distributor 1 in the present embodiment. Here, a plurality of ejection tubes 101 are independent from each other, and each ejector tube 101 communicates with the gas mixing chamber 102, respectively. A plurality of ejection tubes 101 may inject a larger amount of gas, so that the combustion intensity may be increased, the emission of nitrogen oxides may be reduced, thereby ensuring the safety in use.

Further, fasteners 2 may be used to pass through the plurality of flame distributors 1, so that the plurality of flame distributors 1 may be joined together to form a distributor row 10. Thus, a plurality of independent flame distributors 1 may be connected into a whole through the connection of the fasteners 2, thereby realizing a whole installation, and a simple connection operation of the fasteners 2 and a firm fixation.

Preferably, both ends of the fasteners 2 may protrude relative to the flame distributor row 10, i.e., a protruding end of the fasteners 2. In addition, a pressing member 3 may be provided at the protruding end of the fastener 2, and the pressing member 3 may press the flame distributor row 10, so that the shaking between the flame distributors may be reduced, and the stability of the connection of the plurality of distributors may be enhanced. The fastener 2 may be a bolt fastener, the pressing member 3 may be a nut, the bolt may be locked by the nut after passing through the distributor row, however, the selection and connection manner of the fastener 2 and the pressing member 3 are not limited thereto.

Referring to FIG. 9, in an embodiment, the fasteners 2 may be in one pair or in multiple pairs as desired. Each pair of fasteners 2 may be symmetrically arranged relative to the symmetry axis 106 of the flame distributor 1 in the plumb direction, so that the connection stability is further guaranteed.

Referring to FIG. 7 and FIG. 9, in an embodiment, the distributor row 10 is provided with first side plates 4 on either side. The two ends of fasteners 2 respectively penetrate through the first side plate 4 corresponding to the fasteners 2, so that the first side plate surface 4 and the flame distributor row 10 may be integrally connected. In addition, both ends (protruding ends) of the fasteners 2 may protrude with respect to the first side plate 4, so that the first side plate 4 and the flame distributor row 10 may be pressed by the pressing member 3. In this way, after the first side plate 4 is fixedly connected with the flame distributor row 10, the flame distributor row 10 may be directly connected with other components through the first side plate 4.

Referring to FIG. 7 and FIG. 9, in an embodiment, lower ends of the first side plates 4 are bent toward the outside of the flame distributor row 10 and extend horizontally, respectively, to form a first side platform 401. Thus, the first side platform 401 may serve as a connection site for connecting the flame distributor row 10 to other components, the specific connecting manner will be described below.

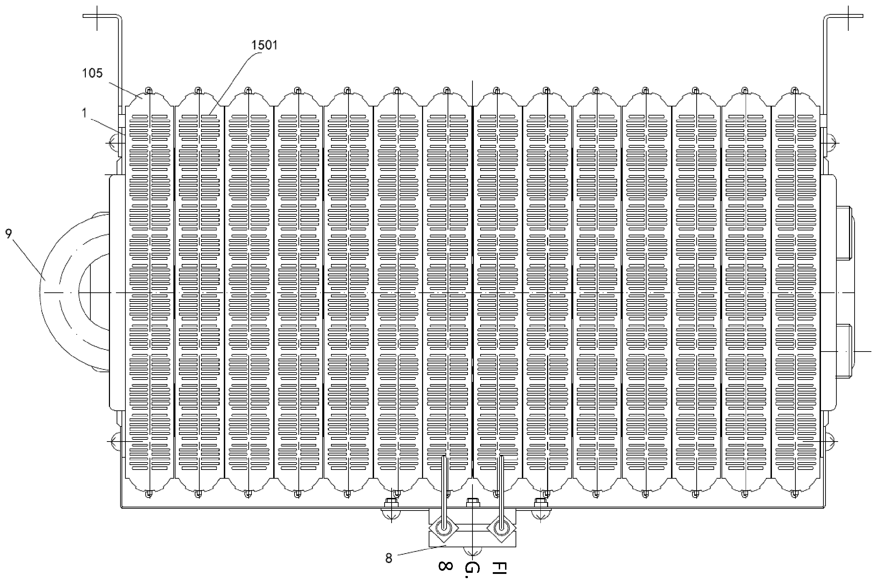

Referring to FIG. 7 and FIG. 9, in an embodiment, a burner further includes a gas distributing device 5 for supplying gas to the flame distributor 1. Referring to FIG. 8, the gas distributing device 5 is provided below the ejection tube 101, gas may enter the ejection tube 101 through the gas distributing device 5, and be guided and ejected toward the top of the flame distributor 1 through the ejection tube 101.

Further, a plurality of gas passages 501 are provided in the gas distributing device 5, the number and distribution manner of the gas passages 501 should correspond to the number and distribution manner of the ejection tubes 101. In addition, the gas passages 501 may communicate with the ejection tubes 101 corresponding to their positions.

Specifically, in an embodiment, referring to FIG. 9, the ejection tube 101 includes a first ejection tube 101A, a second ejection tube 101B, and a third ejection tube 101C. The gas passage 501 may include a first gas passage 501A, a second gas passage 501B, and a third gas passage 501C. The first gas passage 501A is communicated with the first ejection tube 101A corresponding to the position of the first gas passage 501A through a first nozzle 502A; the second gas passage 501B is communicated with a second ejection tube 101B corresponding to the position of the second gas passage 501B through a second nozzle 502B; the third gas passage 501C communicates with the third ejection tube 101C corresponding to the position of the third gas passage 501C through a third nozzle 502C.

Further, as shown in FIG. 7, second side plates 6 are provided at both sides of the gas distributing device 5, the second side plates 6 are fixedly connected to the gas distributing device 5, where the fixed connection manner is not particularly limited. The upper ends of the second side plates 6 are respectively bent toward the outside of the gas distributing device 5 and extend horizontally, thereby forming a second side platform 601.

Preferably, the gas distributing device 5 and the flame distributor row 10 may be fixedly connected at the first side platform 401 and the second side platform 601. Specifically, in an embodiment, bolts 11 or screws may be used for a penetration through the first side platform 401 and the second side platform 601, and at the end of penetration, nuts may be used for locking, so that the gas distributing device 5 is fixedly connected to the flame distributor row 10. Components used for fixed connection are not limited to bolts or screws, other components which may play a fastening role may be applied in this regard; components used for locking are also not limited to nuts, other components capable of performing a locking function may be used.

Referring to FIG. 7 to FIG. 9, in an embodiment, a front side of the flame distributor row 10 is provided with a front side plate 7, an upper portion of the front side plate 7 is provided with an igniter 8. An ignition portion 80 of the igniter 8 may be disposed toward a gas outlet end 103 of the flame distributor 1. In this way, gas ejected from the gas outlet end 103 of the flame distributor 1 may be ignited by the ignition portion 80, thereby realizing combustion.

Further, referring to FIG. 9, in an embodiment, the igniting portion 80 includes a first igniting end 801 and a second igniting end 802.

Referring to FIG. 7 in combination, with reference to the orientation shown in FIG. 7, the first igniting end 801 extends toward the upper side of the front side plate 7 and then bends and continues to extend rearward of the front side plate 7. In this way, the first igniting end 801 is located above the gas outlet end 103, so that gas ejected from the gas outlet end 103 may be ignited to a large extent, thereby improving the utilization rate of the gas.

The second igniting end 802 extends toward the upper side of the front side plate 7 and then bents and extends toward the rear of the front side plate 7, and further bents toward the gas outlet end 103 at the extension end, that is, toward the lower side. Thus, the second igniting end 802 is disposed toward the gas outlet end 103, so that gas may be ignited in time when it is ejected from the gas outlet end 103, thereby increasing combustion intensity.

Referring to FIG. 7 to FIG. 9, in an embodiment, the burner further includes a cooling water pipe 9, and the cooling water pipe 9 may be U-shaped.

In the long-time combustion process of the burner, the flame distributor row turns red, the temperature is increased, and nitrogen oxides are generated. Referring to FIG. 3 in combination, the flame distributor 1 is provided with a first through hole 104, through which both ends of the cooling water pipe 9 pass, respectively, and through the flame distributor row 10. In this way, the cooling water pipe 9 may be brought into close contact with the flame distributor 1, so that the temperature of the flame distributor 1 (flame distributor row 10) may be lowered, and the generation of nitrogen oxides may also be reduced.

Further, a first through hole 104 is provided between adjacent ejection tubes 101. Thus, each of the ejection tubes 101 (a first ejection tube 101A, a second ejection tube 101B, and a third ejection tube 101C) may be adjacent to the cooling water tube 9, and the cooled liquid in the cooling water tube 9 may cool each of the ejection tubes 101 (the first ejection tube 101A, the second ejection tube 101B, and the third ejection tube 101C). Thus, the temperature of gas in each of the ejection tubes 101 may be reduced, so that the temperature of gas ejected from the gas outlet end 103 is lower, thereby further reducing the generation of and the emission of nitrogen oxides.

Referring to FIG. 9, in an embodiment, a top plate 105 is clamped over the distributor 1. Further, the top plate 105 is provided with a plurality of fire holes 1051, and the fire holes 1051 may communicate with the gas outlet end 103, so that the gas ejected from the gas outlet end 103 may be output from the fire holes 1051 to the outside.

Preferably, a first through-hole 104 is provided in close proximity to the top plate 105, so that the cooling water pipe 9 may have a better cooling effect on the top plate 105, thereby further reducing the temperature of gas at the gas output, and thus, better reducing the generation of nitrogen oxides.

In the description of the present invention, reference to the terms "one embodiment," "some embodiments," "an example," "a specific example," or "some examples" or the like means that the specific features, structures, materials, or characteristics described in combination with the embodiment(s) or example(s) are included in at least one embodiment or example of the present invention.

Furthermore, the terms "first" and "second" are used for descriptive purposes only and are not to be construed as indicating or implying relative importance or implicitly indicating the number of technical features indicated. Therefore, features defined with "first" and "second" may explicitly or implicitly include one or more such features. In the description of the present invention, "a plurality of" means two or more, unless specifically defined otherwise.

The above are only the preferred implementations of the present invention. It should be noted that the above preferred implementations should not be regarded as limiting the present invention, and the protection scope of the present invention is defined by the claims. For those of ordinary skill in the art, without departing from the scope of the present invention, several improvements and modifications can be made.

## Claims

1. A water pipe connection structure (1000, 2000, 3000) for a burner,
the water pipe connection structure (1000, 2000, 3000) comprising a first connecting head (100), a second connecting head (200), a first side plate (4), a cooling water pipe (9) and a water inlet pipe (12),
wherein the first connecting head (100) is connected to the cooling water pipe (9), and the second connecting head (200) is connected to the water inlet pipe (12);
wherein the second connecting head (200) is connected to the first connecting head (100);
wherein the first connecting head (100) is provided with a rotation stopping portion (110), the rotation stopping portion (110) is clamped in the first side plate (4); and
the first connecting head (100) is clamped and fastened to the first side plate (4) through the rotation stopping portion (110);the first side plate (4) is provided with a first mounting hole (41), the first mounting hole (41) is adapted to a shape of the rotation stopping portion (110);
the rotation stopping portion (110) is provided with first rotation stopping surfaces (1101) parallel to each other; the first mounting hole (41) is provided with second rotation stopping surfaces (4101) at positions corresponding to the first rotation stopping surfaces (1101); and
the rotation stopping portion (110) is clamped in the first mounting hole (41), the first rotation stopping surfaces (1101) abut against the second rotation stopping surfaces (4101), to enable the first connecting head (100) to be clamped and fastened to the first side plate (4); wherein
the first connecting head (100) further comprises a threaded portion (112);
wherein the threaded portion (112) is provided on the rotation stopping portion (110), the first connecting head (100) is in a thread connection with the second connecting head (200) through the threaded portion (112); wherein an end portion of the water inlet pipe (12) extends outwards to form a clamping foot (121), the clamping foot (121) is abutted against an end surface of the threaded portion (112);
the clamping foot (121) is compressed and fixed to the threaded portion (112), through a thread connection between the second connecting head (200) and the threaded portion (112).

2. The water pipe connection structure (1000, 2000, 3000) according to claim 1, **characterized in that** a sealing ring (400a) is provided between the clamping foot (121) and the threaded portion (112); the sealing ring (400a) is compressed and fixed between the clamping foot (121) and the threaded portion (112), through the thread connection of the threaded portion (112).

3. The water pipe connection structure (1000, 2000, 3000) according to any one of claim 1 or 2, **characterized in that** the first connecting head (100) and the cooling water pipe (9) are connected in a sealed manner by a sealing ring (500).

4. A burner, **characterized by** comprising a water pipe connection structure (1000, 2000, 3000) according to any one of claims 1 to 3.

## Patentansprüche

1. Wasserleitungsverbindungsstruktur (1000, 2000, 3000) für einen Brenner,
wobei die Wasserrohrverbindungsstruktur (1000, 2000, 3000) einen ersten Verbindungskopf (100), einen zweiten Verbindungskopf (200), eine erste Seitenplatte (4), ein Kühlwasserrohr (9) und ein Wassereinlassrohr (12) umfasst,
wobei der erste Verbindungskopf (100) mit dem Kühlwasserrohr (9) und der zweite Verbindungskopf (200) mit dem Wassereinlassrohr (12) verbunden ist;
wobei der zweite Verbindungskopf (200) mit dem ersten Verbindungskopf (100) verbunden ist;
wobei der erste Verbindungskopf (100) mit einem Drehstoppbereich (110) versehen ist, wobei der Drehstoppbereich (110) in der ersten Seitenplatte (4) festgeklemmt ist;
und
der erste Verbindungskopf (100) an der ersten Seitenplatte (4) durch den Drehstoppbereich (110) eingeklemmt und befestigt ist; die erste Seitenplatte (4) mit einem ersten Montageloch (41) versehen ist, das erste Montageloch (41) an eine Form des Drehstoppbereichs (110) angepasst ist;
der Drehstoppbereich (110) mit ersten Drehstoppflächen (1101) versehen ist, die parallel zueinander sind; das erste Montageloch (41) mit zweiten Drehstoppflächen (4101) an Positionen versehen ist, die den ersten Drehstoppflächen (1101) entsprechen; und
der Drehstoppbereich (110) in das erste Montageloch (41) eingeklemmt ist, die ersten Drehstoppflächen (1101) an den zweiten Drehstoppflächen (4101) anliegen, damit der erste Verbindungskopf (100) an der ersten Seitenplatte (4) eingeklemmt und befestigt werden kann; wobei
der erste Verbindungskopf (100) ferner einen Gewindebereich (112) umfasst;
wobei der Gewindebereich (112) an dem Drehstoppbereich (110) vorgesehen ist, der erste Verbindungskopf (100) durch den Gewindebereich (112) in einer Gewindeverbindung mit dem zweiten Verbindungskopf (200) steht; wobei sich ein Endbereich des Wassereinlassrohrs (12) nach außen erstreckt, um einen Klemmfuß (121) zu bilden, wobei der Klemmfuß (121) an einer Endfläche des Gewindebereichs (112) anliegt;
der Klemmfuß (121) durch eine Gewindeverbindung zwischen dem zweiten Verbindungskopf (200) und dem Gewindebereich (112) zusammengedrückt und an dem Gewindebereich (112) befestigt wird.

2. Wasserleitungsverbindungsstruktur (1000, 2000, 3000) gemäß Anspruch 1,
**dadurch gekennzeichnet, dass** ein Dichtungsring (400a) zwischen dem Klemmfuß (121) und dem Gewindebereich (112) vorgesehen ist; der Dichtungsring (400a) zwischen dem Klemmfuß (121) und dem Gewindebereich (112) durch die Gewindeverbindung des Gewindebereichs (112) zusammengedrückt und befestigt wird.

3. Wasserleitungsverbindungsstruktur (1000, 2000, 3000) gemäß einem der Ansprüche 1 oder 2, **dadurch gekennzeichnet, dass** der erste Verbindungskopf (100) und das Kühlwasserrohr (9) durch einen Dichtungsring (500) dichtend verbunden sind.

4. Brenner, **dadurch gekennzeichnet, dass** er eine Wasserleitungsverbindungsstruktur (1000, 2000, 3000) gemäß einem der Ansprüche 1 bis 3 umfasst.

## Revendications

1. Structure de raccordement de conduite d'eau (1000, 2000, 3000) pour un brûleur, la structure de raccordement de conduite d'eau (1000, 2000, 3000) comprend une première tête de raccordement (100), une deuxième tête de raccordement (200), une première plaque latérale (4), une conduite d'eau de refroidissement (9) et une conduite d'entrée d'eau (12), la première tête de raccordement (100) est reliée à la conduite d'eau de refroidissement (9) et la deuxième tête de raccordement (200) est reliée à la conduite d'entrée d'eau (12) ; la deuxième tête de raccordement (200) est reliée à la première tête de raccordement (100) ; la première tête de raccordement (100) est pourvue d'une partie d'arrêt de rotation (110), la partie d'arrêt de rotation (110) est serrée dans la première plaque latérale (4) ; et la première tête de raccordement (100) est serrée et fixée à la première plaque latérale (4) à travers la partie d'arrêt de rotation (110) ; la première plaque latérale (4) est pourvue d'un premier trou de montage (41), le premier trou de montage (41) est adapté à une forme de la partie d'arrêt de rotation (110) ; la partie d'arrêt de rotation (110) est pourvue de premières surfaces d'arrêt de rotation (1101) parallèles les unes aux autres ; le premier trou de montage (41) est pourvu de deuxièmes surfaces d'arrêt de rotation (4101) à des positions correspondant aux premières surfaces d'arrêt de rotation (1101) ; et la partie d'arrêt de rotation (110) est serrée dans le premier trou de montage (41), les premières surfaces d'arrêt de rotation (1101) butent contre les deuxièmes surfaces d'arrêt de rotation (4101), afin de permettre à la première tête de raccordement (100) d'être serrée et fixée à la première plaque latérale (4) ; dans lequel la première tête de raccordement (100) comprend en outre une partie filetée (112) ; la partie filetée (112) étant prévue sur la partie d'arrêt de rotation (110), la première tête de raccordement (100) est en liaison filetée avec la deuxième tête de raccordement (200) par l'intermédiaire de la partie filetée (112) ; dans lequel une partie de l'extrémité de la conduite d'entrée d'eau (12) s'étend vers l'extérieur pour former un pied de serrage (121), le pied de serrage (121) est en butée contre une surface d'extrémité de la partie filetée (112) ; le pied de serrage (121) est comprimé et fixé à la partie filetée (112), par l'intermédiaire d'un raccord fileté entre la deuxième tête de raccordement (200) et la partie filetée (112).

2. Structure de raccordement de conduite d'eau {1000, 2000, 3000) selon la revendication 1, **caractérisée par le fait qu'**une bague d'étanchéité (400a) est prévue entre le pied de serrage (121) et la partie filetée (112) ; la bague d'étanchéité (400a) est comprimée et fixée entre le pied de serrage (121) et la partie filetée (112), par l'intermédiaire du raccord fileté de la partie filetée (112).

3. Structure de raccordement de conduite d'eau (1000, 2000, 3000) selon l'une quelconque des revendications 1 ou 2, **caractérisée par le fait que** la première tête de raccordement (100) et la conduite d'eau de refroidissement (9) sont reliées de manière étanche par une bague d'étanchéité (500).

4. Brûleur, **caractérisé par le fait qu'**il comprend une structure de raccordement de la conduite d'eau (1000, 2000, 3000) selon l'une quelconque des revendications 1 à 3.
